# EUROPEAN PATENT SPECIFICATION

(11) **EP 2 738 424 B1**
(45) Date of publication and mention of the grant of the patent: **15.02.2017**
(21) Application number: 12817818.3
(22) Date of filing: 20.07.2012
(51) Int. Cl.: F16H 25/24, F16C 37/00, F16C 29/04, F16H 57/04

(54) **BALL SCREW BEARING DEVICE**
LAGER FÜR KUGELGEWINDETRIEB
DISPOSITIF DE PALIER POUR VIS À BILLE

(30) Priority: 26.07.2011 JP 2011163033; 30.09.2011 JP 2011217973
(43) Date of publication of application: 04.06.2014
(73) Proprietor: NSK Ltd., Tokyo 141-8560 (JP)
(72) Inventor: NAGAI, Yutaka, Fujisawa-shi Kanagawa 252-0811 (JP)
(74) Representative: Klingseisen, Franz
(86) International application number: PCT/JP2012/004627
(87) International publication number: WO 2013/014895

(56) References cited:
- DE-A1- 4 015 241
- JP-A- H0 425 343
- JP-A- 2000 274 441
- JP-A- 2001 208 159
- JP-A- 2003 056 584
- JP-A- 2010 105 131
- JP-A- 2011 017 419
- JP-A- 2011 017 419
- US-A1- 2011 154 924

## Description

The present invention relates to a ball screw bearing device having a rolling bearing that rotatably supports an end portion of a screw shaft of a ball screw, and a housing to which an outer ring of the rolling bearing is internally fitted.

DE 40 15 241 A1 discloses a ball screw bearing device wherein a housing, having an inner peripheral surface abutting against an outer peripheral surface of the outer ring of the ball bearing and rotatably supporting a screw shaft, has a cooling channel causing cooling air to pass therethrough which is formed in an axial direction of the housing. A cap at the end of the channel is provided with another channel which is in connection with the cooling channel in the housing.

US 2011/0 154 924 A1 discloses a ball screw device including a ball nut having a number of longitudinal channels and compartments for forming a zigzag-shaped fluid flowing passage in the ball nut wherein a number of deflecting members engage with the compartments of the ball nut and each having a recess for communicating adjacent channels with each other.

Ball screws include a nut having a spiral groove formed in an inner peripheral surface, a screw shaft having a spiral groove formed in an outer peripheral surface, and balls arranged between raceway grooves formed by the spiral groove of the nut and the spiral groove of the screw shaft.

If ball screws used as precision feed mechanisms, such as machine tools, injection molding machines, and semiconductor device manufacturing apparatuses, are used with high speed and high cycle, the ball screws have high temperature and heat deformation occurs in the screw shaft or the nut (the screw shaft elongates due to thermal expansion). Along with this, load distribution abnormality of the balls or deterioration of operability occurs, and the positional accuracy of the feed mechanisms is worsened.

Therefore, in the ball screws that require high positional accuracy, measures for cooling the screw shaft, the nut, and the bearing device arranged at an end portion of the screw shaft are taken.

Patent Document 1 describes that a nut and a rolling bearing are cooled by providing gaps between a housing to which an outer ring of the rolling bearing that rotatably supports an end portion of a screw shaft is internally fitted and a body frame fixed to the housing via a heat insulating material and between the nut and a movable body fixed to the nut via a heat insulating material and by feeding cooling air into the respective gaps.

Additionally, Patent Document 2 describes a ball screw having a cooling mechanism in a nut.

### Citation List

### Patent Documents

Patent Document 1: JP H01-117847 U
Patent Document 2: JP 2011-17419 A

### Summary of the Invention

### Problem to be Solved

However, in the technique described in Patent Document 1, there is room for improvement in terms of the cooling efficiency of the rolling bearing. Specifically, since an outer peripheral portion of the housing is cooled and the bearing device that is a heat generation source and its vicinity are not cooled, efficient cooling is not performed.

Thus, the invention has been made paying attention to the above problems and an object thereof is to provide a ball screw bearing device capable of efficiently cooling the vicinity of a rolling bearing that rotatably supports an end portion of a screw shaft of a ball screw, and the vicinity of a bearing device.

This object is achieved by the features in claim 1.

In the above ball screw bearing device, a groove portion that communicates with the through-holes for cooling is formed in an end surface of the housing.

Additionally, it is possible to adopt a configuration in which the through-holes for cooling are coupled together by pipes via joint members outside the housing.

Additionally, the through-holes for cooling may be equally arranged along the circumferential direction of the housing.

By arranging the above through-holes for cooling in this way, it is possible to cool uniformly in the circumferential direction of the housing by using the through-holes for cooling provided inside the housing closer the rolling bearing than the outside of the housing. Therefore, the rolling bearing that rotatably supports the end portion of the screw shaft of the ball screw is able to be cooled more efficiently than the method of Patent Document 1 that cools the outside of the housing with air.

Additionally, three to six of the through-holes for cooling may be formed.

Although a cooling effect is able to be enhanced as the number of the through-holes for cooling is larger, the mechanical strength of the housing decreases and machining costs also increase. Additionally, when the number of the through-holes for cooling is two, even if the through-holes for cooling are arranged at an equal interval in the circumferential direction, a temperature gradient occurs and the housing is easily thermally deformed in an elliptical shape because the arrangement interval of the through-holes for cooling is large. Hence, the through-holes for cooling are preferably arranged within a range of three or more and six or less.

Additionally, the through-holes for cooling are preferably arranged on an end portion side of the screw shaft or on a flange side.

### Advantageous Effects of the Invention

According to the ball screw bearing device of the embodiment of the invention, the vicinity of the rolling bearing that rotatably supports the end portion of the screw shaft of the ball screw or the vicinity of the bearing device is able to be efficiently cooled.

### Brief Description of the Drawings

FIG. 1 is a front view illustrating an embodiment, not part of the invention, of a ball screw bearing device.
FIG. 2 is a view when the bearing device of FIG. 1 is viewed from arrow a.
FIG. 3 is a view when the bearing device of FIG. 1 is viewed from arrow b.
FIG. 4 is a cross-sectional view taken along IV-IV of FIG. 3.
FIG. 5 is a plan view illustrating a retaining lid that constitutes the bearing device of FIG. 1.
FIG. 6 is a front view illustrating a configuration in an embodiment of the invention of the ball screw bearing device.
FIG. 7 is a right side view illustrating the configuration in the second embodiment of the ball screw bearing device.
FIG. 8 is a left side view illustrating the configuration in the second embodiment of the ball screw bearing device.
FIG. 9 is a cross-sectional view along an axial direction, illustrating the configuration in the second embodiment of the ball screw bearing device.

### Description of Embodiments

Hereinafter, an embodiment of a ball screw bearing device will be described with reference to the drawings.

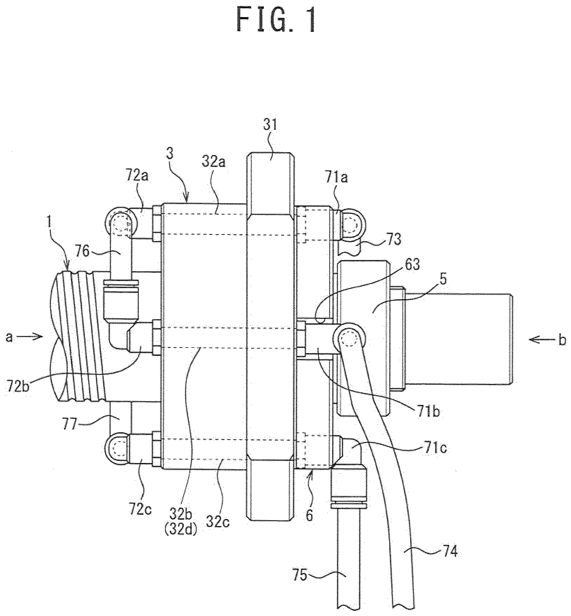

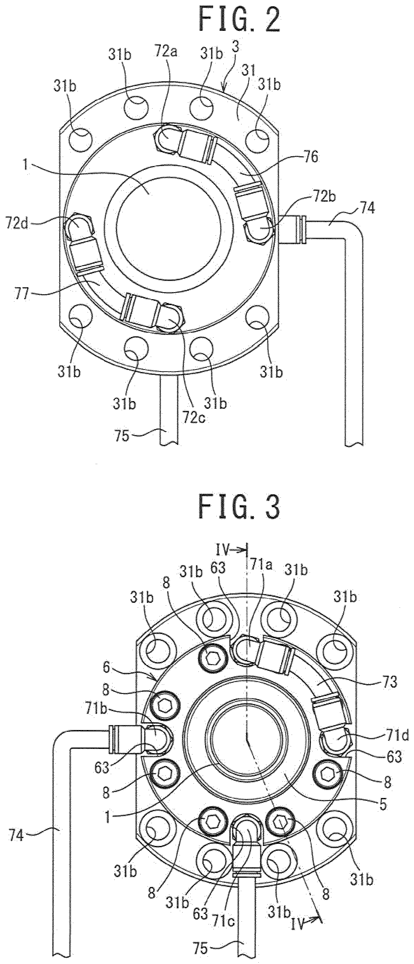

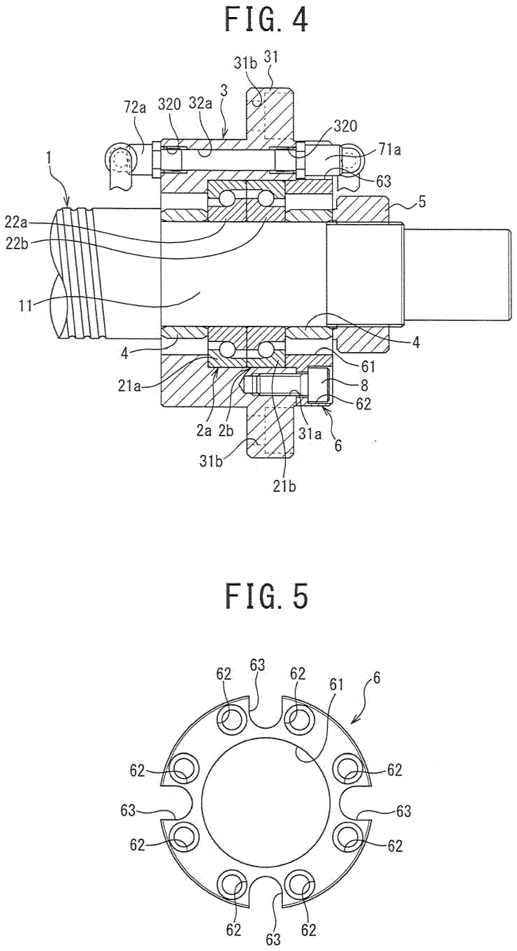

The ball screw bearing device of this embodiment, as illustrated in FIG. 4, has two rolling bearings 2a and 2b that rotatably support an end portion 11 of a screw shaft 1 of a ball screw, and a housing 3 into which outer rings 21a and 21b of both the rolling bearings 2a and 2b are internally fitted. Additionally, the bearing device has a collar 4 and a locking nut 5 that retain the movement of inner rings 22a and 22b of the rolling bearings 2a and 2b in an axial direction, and the retaining lid 6 that retains the movement of the outer rings 21a and 21b in the axial direction. Moreover, as illustrated in FIGS. 1 to 4, the bearing device has joint members 71a to 71d and 72a to 72d, pipes 73 to 77, and bolts 8 that fix the retaining lid 6 to a flange 31.

An end portion 11 of the screw shaft 1 serves as a smaller-diameter portion, and the collar 4 is arranged between a stepped portion of the end portion and the inner ring 22a of one rolling bearing 2a. Another collar 4 is also arranged outside the inner ring 22b of the other rolling bearing 2b, and the locking nut 5 is arranged outside the collar.

The outer rings 21a and 21b of the rolling bearings 2a and 2b are arranged at a larger-diameter portion of an inner peripheral surface of the housing 3. An end surface of the outer ring 21a of one rolling bearing 2a abuts against a stepped surface, and the outer ring 21b of the other rolling bearing 2b abuts against an end surface of the retaining lid 6.

As illustrated in FIGS. 1 to 4, the flange 31 is formed at one axial end of the housing 3. The flange 31 is formed with female threads 31a that allow the bolts 8 to be screwed thereto, and bolt holes 31b that allow the bolts for attachment to be inserted thereinto. Additionally, four through-holes for cooling 32a-32d that penetrate in the axial direction are formed at equal intervals in a circumferential direction in the housing 3. Tapered female thread portions 320 for a pipe are formed at both ends of each of the through-holes for cooling 32a to 32d.

As illustrated in FIG. 5, the retaining lid 6 is a disk-shaped member that has a center hole 61 with a size such that the screw shaft 2 is loosely fitted thereinto, and the bolt holes 62 where head sides of the bolts 8 are arranged are formed at equal intervals in eight places in the circumferential direction. The bolt holes 62 are provided at positions corresponding to the female threads 31a of the housing 3. Additionally, recesses 63 are formed at positions corresponding to the respective through-holes for cooling 32a to 32d of the housing 3 at an outer peripheral portion of the retaining lid 6.

During assembling, first, one collar 4 is brought into contact with and attached to the stepped portion of the end portion 11 of the screw shaft 1, and then, the rolling bearings 2a and 2b are attached between the housing 3 and the end portion 11 of the screw shaft 1. Next, the screw shaft 1 is passed through the center hole 61 of the retaining lid 6, the retaining lid 6 is arranged on the flange 31 side of the housing 3, and the bolts 8 are inserted through the bolt holes 62 of the retaining lid 6 and screwed to the female threads 31a of the flange 31. Next, the other collar 4 is attached to the end portion 11 of the screw shaft 1 and the locking nut 5 is fastened to the collar. As a result, the outer rings 21a and 21b of the rolling bearings 2a and 2b are fixed to the housing 3, and the inner rings 22a and 22b are fixed to the end portion 11 of the screw shaft 1.

In this state, the respective joint members 71a to 71d and 72a to 72d are put in from the recesses 63 of the retaining lid 6, and as illustrated in FIG. 4, tip portions (tapered male thread portions for pipes) of the joint members are screwed to the tapered female thread portions 320 for pipes of the through-holes for cooling 32a to 32d.

This, as illustrated in FIGS. 1 to 3, brings about a state where each of the joint members 71a to 71d and each of the joint members 72a to 72d are coupled to both ends of each of the through-holes for cooling 32a to 32d of the housing 3.

Then, the joint member 71a and the joint member 71d on the flange 31 side are coupled together by the pipe 73. A coolant introducing pipe 74 is connected to the joint member 71b on the flange 31 side. A coolant discharging pipe 75 is connected to the joint member 71c on the flange 31 side. On the side where the flange 31 of the housing 3 is not formed, the joint member 72a and the joint member 72b are coupled together by the pipe 76, and the joint member 72c and the joint member 72d are coupled together by the pipe 77.

In the ball screw of this embodiment, a coolant introduced from the coolant introducing pipe 74 flows in order of joint member 71b → cooling through-hole 32b of housing 3 → joint member 72b → pipe 76 → joint member 72a → cooling through-hole 32a of housing 3 → joint member 71a → pipe 73 → joint member 71d → cooling through-hole 32d of housing 3 → joint member 72d → pipe 77 → joint member 72c → cooling through-hole 32c of housing 3 → joint member 71c→ coolant discharging pipe 75. The housing 3 is cooled by this flow of the coolant.

Accordingly, according to the bearing device of this embodiment, since the housing 3 is uniformly cooled in the circumferential direction, the rolling bearings 2a and 2b, and the end portion 11 of the screw shaft 1 are uniformly cooled in the circumferential direction, and heat deformation is suppressed. Since the rolling bearings 2a and 2b are efficiently cooled along with this, it is possible to prevent load distribution abnormality of the balls of the rolling bearings 2a and 2b or deterioration of operability.

Note that in the ball screw including the cooling mechanism only in the nut, for example as in Patent Document 2, cooling of the screw shaft is performed only within the movement range of the nut and the cooling effect for the end portion of the screw shaft is not able to be expected. Therefore, it is useful to use the bearing device of the present embodiment together.

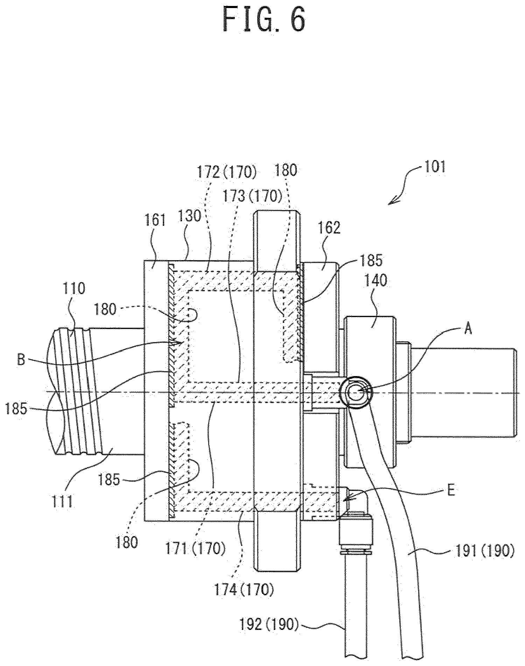

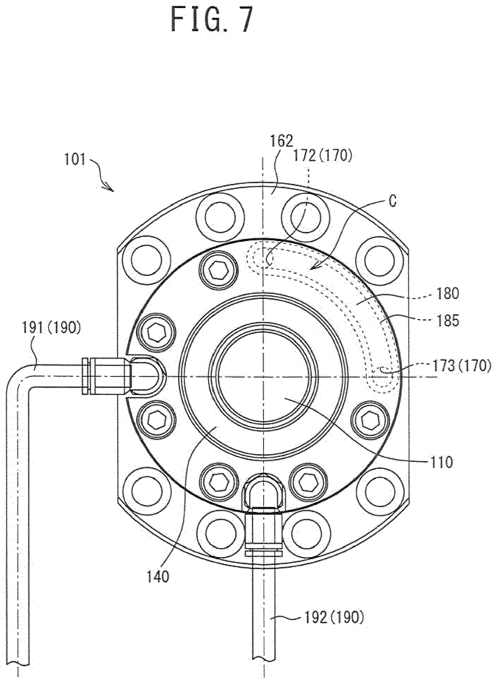

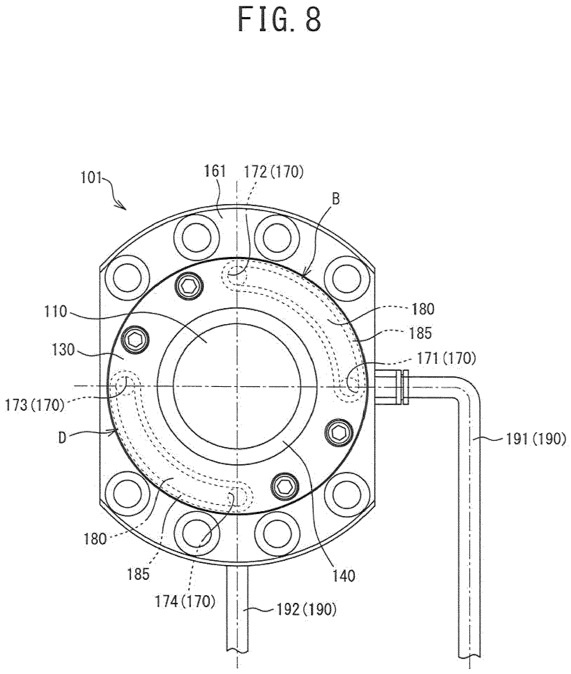

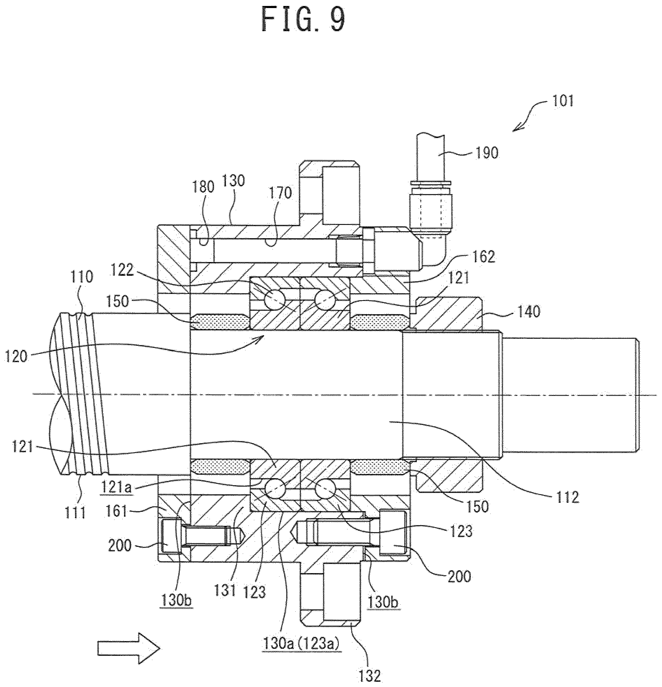

Next, an inventive embodiment of the ball screw bearing device will be described with reference to the drawings. FIG. 6 is a front view illustrating a configuration in the present embodiment of the ball screw bearing device. Additionally, FIG. 7 is a right side view illustrating the configuration in this embodiment of the ball screw bearing device. Additionally, FIG. 8 is a left side view illustrating the configuration in the present embodiment of the ball screw bearing device. Additionally, FIG. 9 is a cross-sectional view along the axial direction, illustrating the configuration in the second embodiment of the ball screw.

As illustrated in FIGS. 6 to 9, a ball screw bearing device 101 of the present embodiment includes a double-row rolling bearing 120 that rotatably supports a screw shaft 110 of the ball screw, and a housing 130 that accommodates the rolling bearing 120.

### <Rolling Bearing>

As illustrated in FIG. 9, the rolling bearing 120 has two inner rings 121 and 121 that fit to an end portion of the screw shaft 110 and rotate integrally with the screw shaft 110, and outer peripheral surfaces 121a and 121a of the inner rings 121 and 121 are respectively provided with outer rings 123 and 123 that rotatably support the inner ring 121 via a plurality of rolling elements 122.

The inner ring 121 of the rolling bearing 120 is positioned at a predetermined position by a step portion 111 formed at the screw shaft 110 and a locking nut 140. The locking nut 140 is screwed into the end portion of the screw shaft 110, and a collar 150 made of, for example, a disk spring, a coil spring, or a metal with a longitudinal elastic modulus, is provided at an outer periphery of the screw shaft 110 between the locking nut 140 and the inner ring 121.

Additionally, the inner ring 121 of the rolling bearing 120 is pressed against the aforementioned step portion 111 by the fastening force of the locking nut 140, and a collar 150 made of, for example, a disk spring, a coil spring, or a metal with a longitudinal elastic modulus is provided at the outer periphery of the screw shaft 110 between the step portion 111 and the inner ring 121.

Note that the inner ring 121 of the rolling bearing 120 is positioned at a predetermined position by the step portion 111 formed at the screw shaft 110 and the locking nut 140.

### <Housing>

The housing 130 has, for example, a cylindrical shape. Additionally, as illustrated in FIG. 9, an inner peripheral surface 130a of the housing 130 is fitted to an outer peripheral surface (an outer peripheral surface 123a of the outer ring 123) of the rolling bearing 120. Accordingly, the housing 130 rotatably supports the screw shaft 110.

Additionally, as illustrated in FIG. 9, an outer peripheral surface of the housing 130 is slidably fitted to an inner peripheral surface of a bearing support that is not illustrated. That is, the bearing support (not illustrated) supports the rolling bearing 120 via the housing 130.

### <Retaining Lid>

The outer ring 123 of the rolling bearing 120 is positioned at a predetermined position by a step portion 131 in the inner peripheral surface 130a of the housing 130 and a second retaining lid 162. The retaining lid 161, 162 is attached to axial end surfaces 130b and 130b of the housing 130 by a plurality of bolts 200 (refer to FIG. 9).

### <Cooling through-hole>

The housing 130 is formed with a plurality of through-holes for cooling 170 that pass through both ends (both end surfaces) of the housing 130 in the axial direction. The through-holes for cooling 170 are preferably arranged on the same circumference along the outer peripheral surface of the housing 130 or are more preferably equally arranged. Note that the through-holes for cooling 170 are provided in order to pass a cooling fluid therethrough. The cooling fluid is supplied or discharged by a cooling pipe 190 coupled to any of the plurality of through-holes for cooling 170. The cooling pipe 190 is coupled to a cooling-medium circulating device (not illustrated) that supplies a cooling medium, and recovers the cooling medium to have a cooling function again and supply the cooling medium again.

### <Groove Portion>

It is preferable that groove portion 180 that communicates with opening portions of the through-holes for cooling 170 be formed along outer peripheries of the end surfaces 130b and 130b in the end surfaces 130b and 130b of the housing 130. The groove portion 180 provided in this way is sealed by the first retaining lid 161 or the second retaining lid 162 via a gasket 185, thereby forming flow channels B to D (refer to FIGS. 7 and 8) that communicate with the through-holes for cooling 170. By adopting a form in which the groove portion 180 is formed, the number of parts for supplying the cooling medium passed through the through-holes for cooling 170 is reduced compared to a form in which only the through-holes for cooling 170 are formed in the housing 130. As a result, it is possible to achieve a reduction in cost.

Here, as described above, although the flow channels are formed by the groove portion 180 and the first retaining lid 161 or second retaining lid 162, it is preferable that the surfaces of the first retaining lid 161 and the second retaining lid 162 that face the groove portions 180 be flat. This is because the flow channels may not be favorably formed due to mismatching of the flange, or the like if the surfaces of the first retaining lid 161 and the second retaining lid 162 that face the groove portion 180 are formed with other groove portions corresponding to the groove portions 180, it is also possible to reduce machining costs, and product management is also easy.

### [Installation Position of Cooling Through-hole]

As the installation positions of the plurality of formed through-holes for cooling 170, it is preferable to equally arrange the through-holes for cooling along the circumferential direction of the housing 130. However, when the number of the through-holes for cooling 170 is two, that is, when the through-holes for cooling 170 are equally arranged (equal arrangement of 180°), temperature becomes high in portions apart from the through-holes for cooling 170. Therefore, a temperature gradient occurs, and the cross-sectional shape of the outer ring 123 of the rolling bearing 120 becomes a rugby ball shape. As a result, since the roundness (cylindricity) of the outer ring 123 of the rolling bearing 120 decreases and the load to the rolling bearing 120 becomes uneven, operability or the like is easily affected, which is not preferable.

### [Number of Through-holes for cooling]

Additionally, it is believed that the number of the through-holes for cooling 170 is increased whereby a larger cooling effect than that of the rolling bearing 120 is obtained and the roundness (cylindricity) of the outer ring 123 of the rolling bearing 120 is improved. However, the number of the through-holes for cooling 170 should not be carelessly increased. This is because increasing the number of the through-holes for cooling 170 also means the strength reduction of the housing 130 and consequently leads to reducing the support rigidity of the ball screw shaft.

In addition, since the machining of the through-holes for cooling 170 has a large longitudinal length ratio, substantial time and effort will be required for machining and costs will be raised.

Thus, in the present embodiment, as illustrated in FIGS. 6 to 8, the number of the through-holes for cooling 170 is four, but may be three when it is difficult to equally provide four through-holes for cooling 170 depending on structure.

### [Circulation Path of Cooling Medium]

In the ball screw bearing device 101 in which the through-holes for cooling 170 are formed in this way, as illustrated in FIGS. 6 to 8, a cooling medium supplied from a cooling pipe 191 flows into a cooling through-hole 171 coupled to the cooling pipe 191 in portion "A", flows into a cooling through-hole 172 through a flow channel "B", flows into a through-holes for cooling 173 through a flow channel "C", flows into a cooling through-hole 174 through a flow channel "D", and is discharged from a cooling pipe 192 coupled in portion "E".

As described above, in the ball screw bearing device 101, the nearest portion to a bearing that is a heat generation source is able to be efficiently cooled by providing the plurality of through-holes for cooling 170 in the housing 130 and making a cooling fluid flowing through a flow channel formed by the through-holes for cooling 170, the groove portion 180, and the first retaining lid 161 or the second retaining lid 162. As a result, it is possible to suppress heat generation of the rolling bearing 120, it is possible to decrease the elongation between the ball screw and the screw shaft 110 caused by thermal expansion, and it is possible to improve positional accuracy or the like.

Additionally, temperature distribution is able to be nearly uniform and uneven heat deformation is able to be suppressed by equally arranging the through-holes for cooling 170. Therefore, it is possible to prevent the load distribution abnormality of the balls (rolling elements 122) inside the rolling bearing 120 or the deterioration of operability.

Here, in the ball screw bearing device 101 of the present embodiment, the cooling pipe 190 (191, 192) may be arranged on the end portion 112 side (portion where a screw groove is not formed) of the screw shaft 110. Additionally, in the bearing device 101 of the ball screw of the present embodiment, the cooling pipe 190 (191, 192) may be arranged on the flange 132 side.

As the cooling pipe 190 (191, 192) is arranged on the end portion 112 side of the screw shaft 110, that is, the through-holes for cooling 170 are formed on the end portion 112 side of the screw shaft 110, the movement range of a nut (not illustrated) of the ball screw is not affected compared to a case where the through-holes for cooling 170 are arranged on the side where the screw groove of the screw shaft 110 is formed. Therefore, it is possible to increase the movement range of the nut (not illustrated) of the ball screw.

Additionally, as the cooling pipe 190 (191, 192) is arranged on the flange 132 side, that is, the through-holes for cooling 170 are arranged on the flange 132 side, the housing 130 is able to be assembled to a housing fixing member (for example, the bearing support or the like) that is not illustrated, with the cooling pipe 190 (191, 192) being assembled. Specifically, in assembling the housing 130 to the above housing fixing member, in FIG. 9, the above housing fixing member is assembled to the housing 130 in the direction of an arrow. That is, if the cooling pipe 190 (191, 192) is arranged on the side (side where the first retaining lid 161 is provided) of the housing 130 where the flange 132 is not formed, it is necessary to attach the cooling pipe 190 (191, 192) after the housing 130 is assembled to the above housing fixing member. However, in an aspect where the cooling pipe 190 (191, 192) is arranged on the flange 132 side, the cooling pipe 190 (191, 192) does not interfere when the housing 130 is assembled to the above housing fixing member. Accordingly, the housing 130 is able to be assembled to the above housing fixing member with the cooling pipe 190 (191, 192) being assembled by arranging the cooling pipe 190 (191, 192) on the flange 132 side.

Although the second embodiment of the ball screw bearing device has been described above, the invention is not limited to this, and it is possible to make various alternations and improvements. For example, in the above-described embodiment, the double-row rolling bearing has been illustrated as the bearing that supports the screw shaft of the ball screw. However, the invention is not limited to this, and a single-row rolling bearing may be adopted. Additionally, the ball screw bearing device of the present embodiment is preferably used together with a nut cooling system that cools the nut. In shaft core cooling of the ball screw, the bearing is also cooled because a cooling path is formed inside the screw shaft. However, the nut cooling is effective when only the portion of the bearing along which the nut moves is cooled and the cooling effect of the bearing is not be able to be expected. For this reason, the cooling of the bearing is also required in the nut cooling.

### Reference Signs List

- 1:: screw shaft
- 11:: end portion of screw shaft
- 2a, 2b:: rolling bearing
- 21a, 21b:: outer ring
- 22a, 22b:: inner ring
- 3:: housing
- 31:: flange
- 31a:: female thread
- 31b:: bolt insertion hole
- 32a to 32d:: cooling through-hole
- 320:: tapered female thread portion for pipe
- 4:: collar
- 5:: locking nut
- 6:: retaining lid
- 61:: center hole
- 62:: bolt hole
- 63:: recess
- 71a to 71d:: joint member
- 72a to 72d:: joint member
- 73:: pipe
- 74:: coolant introducing pipe
- 75:: coolant discharging pipe
- 76:: pipe
- 77:: pipe
- 8:: bolt
- 101:: ball screw bearing device
- 110:: screw shaft
- 111:: step portion
- 120:: rolling bearing
- 121:: inner ring
- 122:: rolling element
- 123:: outer ring
- 130:: housing
- 131:: step portion
- 132:: flange
- 140:: locking nut
- 150:: collar
- 161, 162:: retaining lid
- 170:: cooling through-hole
- 180:: groove portion
- 190:: cooling pipe

## Claims

1. A ball screw bearing device comprising:
an inner ring **(121)** fitting to an end portion **(112)** of a screw shaft **(110)** of a ball screw and rotating integrally with the screw shaft;
an outer ring **(123)** rotatably supporting the inner ring **(121)** via a plurality of rolling elements **(122)** arranged on an outer peripheral surface of the inner ring **(121);** and
a housing **(130)** having an inner peripheral surface abutting against an outer peripheral surface of the outer ring **(123)** and rotatably supporting the screw shaft **(110),**
**characterised in that** a plurality of through-holes for cooling **(170),** passing through both ends of the housing **(130)** and causing a cooling medium to pass therethrough are formed in an axial direction of the housing **(130),**
**a groove portion (180) communicating with the through-holes for cooling (170) is formed in an end surface of the housing (130),**
**the ball screw bearing device (101) includes a retaining lid (161, 162),**
**the groove portion (180) and the retaining lid (161, 162) form a flow channel of the cooling medium, and**
**a surface of the retaining lid (161, 162) which faces the groove portion (180) is flat.**

2. The ball screw bearing device according to Claim 1,
wherein the through-holes for cooling **(170)** are coupled together by pipes **(190)** via joint members outside the housing **(130).**

3. The ball screw bearing device according to any one of Claims 1 **and 2,**
wherein the through-holes for cooling **(170)** are equally arranged along the circumferential direction of the housing **(130).**

4. The ball screw bearing device according to any one of Claims 1 to **3,**
wherein three to six of the through-holes for cooling **(170)** are formed.

5. The ball screw bearing device according to any one of Claims 1 to **4,**
wherein the through-holes for cooling **(170)** are arranged on an end portion **(112)** side of the screw shaft **(110)** or on a flange **(132)** side.

## Patentansprüche

1. Kugelgewindelagereinrichtung, umfassend:
einen inneren Ring (121), der auf einen Endabschnitt (112) einer Gewindewelle (110) eines Kugelgewindes angebracht ist und zusammen mit der Gewindewelle rotiert;
einen äußeren Ring (123), der den inneren Ring (121) über mehrere Wälzelemente (122) rotierbar trägt, die auf einer Außenumfangsseite des inneren Rings (121) angeordnet sind; und
ein Gehäuse (130), das eine innere Umfangsoberfläche aufweist, welche gegen eine äußere Umfangsoberfläche des äußeren Rings (123) anliegt und die Gewindewelle (110) rotierbar trägt,
**dadurch gekennzeichnet, dass**
mehrere Durchgangsöffnungen zum Kühlen (170), die durch beide Enden des Gehäuses (130) hindurchverlaufen und ein Kühlmedium veranlassen, dort hindurchzutreten, in einer Axialrichtung des Gehäuses (130) ausgebildet sind,
ein Nutabschnitt (180), der mit den Durchgangsöffnungen zum Kühlen (170) verbunden ist, in einer Endoberfläche des Gehäuses (130) ausgebildet ist,
die Kugelgewindelagereinrichtung (101) einen Rückhaltedeckel (161, 162) enthält, wobei der Nutabschnitt (180) und der Rückhaltedeckel (161, 162) einen Strömungskanal des Kühlmediums ausbilden, und dass eine Oberfläche des Rückhaltedeckels (161, 162), welche auf den Nutabschnitt (180) weist, flach ist.

2. Kugelgewindelagereinrichtung nach Anspruch 1,
wobei die Durchgangsöffnungen zum Kühlen (170) miteinander durch Leitungen (190) über Verbindungselemente außerhalb des Gehäuses (130) gekoppelt sind.

3. Kugelgewindelagereinrichtung nach irgendeinem der Ansprüche 1 und 2, wobei die Durchgangsöffnungen zum Kühlen (170) entlang der Umfangsrichtung des Gehäuses (130) gleich angeordnet sind.

4. Kugelgewindelagereinrichtung nach irgendeinem der Ansprüche 1 bis 3, wobei drei bis sechs der Durchgangsöffnungen zum Kühlen (170) ausgebildet sind.

5. Kugelgewindelagereinrichtung nach irgendeinem der Ansprüche 1 bis 4, wobei die Durchgangsöffnungen zum Kühlen (170) auf einer Seite des Endabschnitts (112) der Gewindewelle (110) oder auf einer Seite eines Flansches (132) angeordnet sind.

## Revendications

1. Dispositif de palier de vis à billes comprenant:
un anneau intérieur (121) s'emboîtant à une partie d'extrémité (112) d'une goupille de vis (110) d'un vis à billes et tournant intégralement avec la goupille de vis;
un anneau extérieur (123) supportant de manière rotative l'anneau intérieur (121) par l'intermédiaire d'une pluralité d'éléments roulants (122) disposés sur une surface périphérique externe de l'anneau intérieur (121); et
un boîtier (130) ayant une surface périphérique intérieure attenant à une surface périphérique extérieure de l'anneau extérieur (123) et supportant de manière rotative la goupille de vis (110),
**caractérisé en ce qu'**
une pluralité de trous traversants pour le refroidissement (170) qui passent à travers tous les deux extrémités du boîtier (130) et qui font à un fluide de refroidissement de passer à travers celui-ci sont formés dans une direction axiale du boîtier (130),
une partie de rainure (180) communiquant avec les trous traversants pour le refroidissement (170) est formé dans une surface d'extrémité du boîtier (130),
le dispositif de palier de vis à billes (101) comprend un couvercle de retenue (161, 162),
la partie de rainure (180) et le couvercle de retenue (161, 162) forment un canal d'écoulement du fluide de refroidissement, et
une surface du couvercle de retenue (161, 162) qui fait face à la partie de rainure (180) est plate.

2. Dispositif de palier de vis à billes selon la revendication 1,
dans lequel les trous traversants pour le refroidissement (170) sont couplés les uns aux autres par des tuyaux (190) par l'intermédiaire d'éléments de raccord à l'extérieur du boîtier (130).

3. Dispositif de palier de vis à billes selon l'une des revendications 1 et 2, dans lequel les trous traversants pour le refroidissement (170) sont également disposés le long de la direction circonférentielle du boîtier (130).

4. Dispositif de palier de vis à billes selon l'une des revendications 1 à 3, dans lequel trois à six des trous traversants pour le refroidissement (170) sont formés.

5. Dispositif de palier de vis à billes selon l'une des revendications 1 à 4, dans lequel les trous traversants pour le refroidissement (170) sont disposés sur un côté partie d'extrémité (112) de la goupille de vis (110) ou sur un côté bride (132).
